# EUROPEAN PATENT SPECIFICATION

(11) **EP 3 530 627 B1**
(45) Date of publication and mention of the grant of the patent: **30.06.2021**
(21) Application number: 19158923.3
(22) Date of filing: 22.02.2019
(51) Int. Cl.: C03B 9/447

(54) **TAKE OUT TONG HEAD SHOCK ABSORBER FOR AN IS MACHINE**
ENTNAHMEZANGENKOPFSTOSSDÄMPFER FÜR EINE IS-MASCHINE
AMORTISSEUR DE TÊTE DE PINCE D'EXTRACTION POUR UNE MACHINE IS

(30) Priority: 22.02.2018 EP 18158164
(43) Date of publication of application: 28.08.2019
(73) Proprietor: IS Engineering AG, 6300 Zug (CH)
(72) Inventor: KUZ, Zdenko, 6038 Gisikon (CH)
(74) Representative: Grosfillier, Philippe

(56) References cited:
- GB-A- 2 102 366
- US-A1- 2010 284 774

## Description

### TECHNICAL FIELD AND BACKGROUND ART

The present invention concerns the field of machines for the production of glass containers. For example, such machines are called individual section machines ("IS machines). Examples of such machines and parts therefrom are disclosed in PCT publication WO 2008/084458 A1 and WO 2016/132236 A1 and in US Publication US 2010/0284774 A1 and reference is made to these publications for a general description of this technology.

Specifically, the present invention relates to a device for transferring containers from one station to another. More particularly, this invention relates to a takeout tong head for transferring glassware articles from a station to another station in a glassware forming machine.

A take out system as used in such machines comprises three primary subsystems, a take out mechanism, a take out arm and a take out tong head.

Typical takeout tong heads are shown in US Patents 2,277,828, 3,549,191 and 4,185,985 for example.

### SUMMARY OF THE INVENTION

During commercial hollow glass container production, a number of individual mechanisms are involved in the production process. They interact in a predefined and coordinated pattern with each other during a complete process cycle (IS-Cycle).

The various mechanisms are mounted on a production platform, the so-called Individual Section (IS-Section). A set of IS-Sections working together under the control of a single machine controller is referred to as a hollow glass container production machine (IS-Machine). Glass containers are transferred between molding stages first by the invert-neck ring (IVN) arm and then by the take-out arm (TOA) with its tong head which brings the container from the mold to the manufacturing plant conveyer belt.

In the compact environment of a working IS machine it is common for a TOA or take out tong head to collide with other parts. This can result in damages to the machinery and requires system down time (i.e. no production). Following an impact, maintenance must be performed on the arm, parts must be replaced, and the arm must be recalibrated to a neutral position. This is costly in both time and money. The most common points of failure upon impact are ruptures in the timing belt and plastic deformation of the shaft; both components and parts of the take out arm.

Accordingly, it is an aim of the present invention to improve the known systems and machines.

A further aim of the present invention is to improve the systems such that impacts between parts of the machine are reduced and/or do not have important consequences.

In order to solve the above problems, the invention disclosed in this application comprises a shock absorber that allows the take out tong head to rotate relative the output shaft of the takeout arm on which the take out tong head is mounted. The shock absorber dissipates the impact forces and torques applied on the take out tong head in order to minimize damage upon an impact on the take out arm, tong head body, tong cartridges, or other.

Damage to various parts of the take out arm assembly in case of impact on the take out tong head is most common. The shock absorber reduces the impact on the take out arm and also returns the tong head to its working position, post impact.

This invention is useful, inter alia, to:
-) Minimize damage to the system upon impact between the TOA and other machinery;
-) Dissipate kinetic energy transferred to the TOA upon impact;
-) Return the tong head to the neutral operating position relative to the output shaft, following an impact;
-) Minimize operation cost and increase net production by reducing part maintenance frequency, downtime and associated labor cost.

The invention concerns a take out arm, for an IS production machine, wherein said take out arm comprises at least an input shaft, a gear box, an output shaft and a tongue head, wherein the arm comprise shock absorbing means to allow a rotation of the tongue head on the output shaft upon an impact on the take out arm and a return to an operating position of the take out arm relative to the output shaft following said impact.

Preferably, in embodiments, the shock absorbing means comprise a spring system. Preferably, in embodiments, the shock absorbing means (17) are preloaded.

In embodiments, a Take out arm adapter plate of the take out arm is in contact with the output shaft and its motion is fixed relative to the output shaft, wherein the adapter plate has a reference surface which pairs to another reference surface on a tong head adapter plate, to limit the rotation of the tong head relative to the output shaft, and wherein the shock absorbing means compress the two reference surfaces together and ensure that they remain in contact while the system is in both neutral and standard operating conditions.

In embodiments, the rotation is limited and the impact cushioned by said shock absorbing means.

In embodiments, the shock absorbing means comprise a spring housing, an end cap and a bolt on which are mounted a nut and a locking nut.

In embodiments, a first washer is fastened to the head using one or more bolts, a second washer is placed on the connecting screw and is used as a contact surface for one or more spring(s).

In embodiments, an end cap is fastened to the connecting screw, wherein the end cap compresses the one or more spring(s) as the joint between the end cap and connecting screw is tightened, to generate a linear spring force that secures the springs, washers, head and adapter plates to the output shaft.

The fastening of the end cap on the screw may be made by a threaded connection, for example, or another equivalent way.

In embodiments, the invention concerns a machine comprising at least a take out arm as defined in the present application.

### BRIEF DESCRIPTION OF THE DRAWINGS

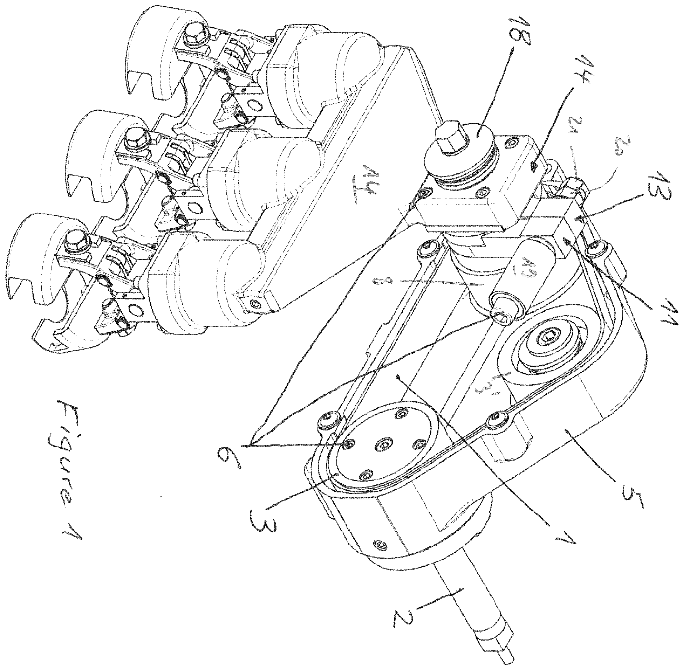

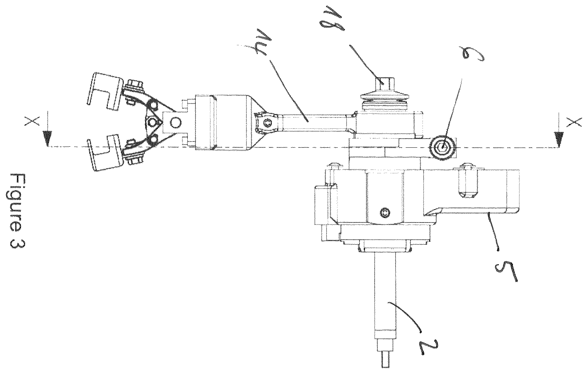

**Figure 1** - 3D view of a Takeout Arm, take out tong head and the shock absorber with the take out arm cover hidden for clarity;
**Figure 2** - Front view of the Takeout Arm, take out tong head and the shock absorber showing the locations of Sections U-U, V-V & Z-Z;
**Figure 3** - Side view of the Takeout Arm, take out tong head and the shock absorber showing the location of Section X-X;

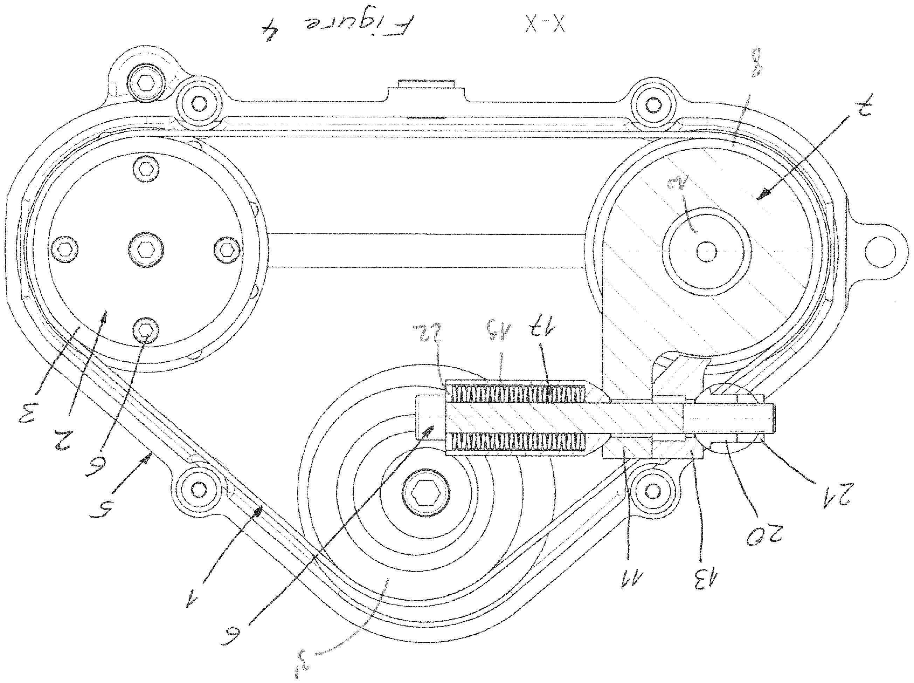

**Figure 4** - Section X-X of the take out arm and the shock absorber in working position;

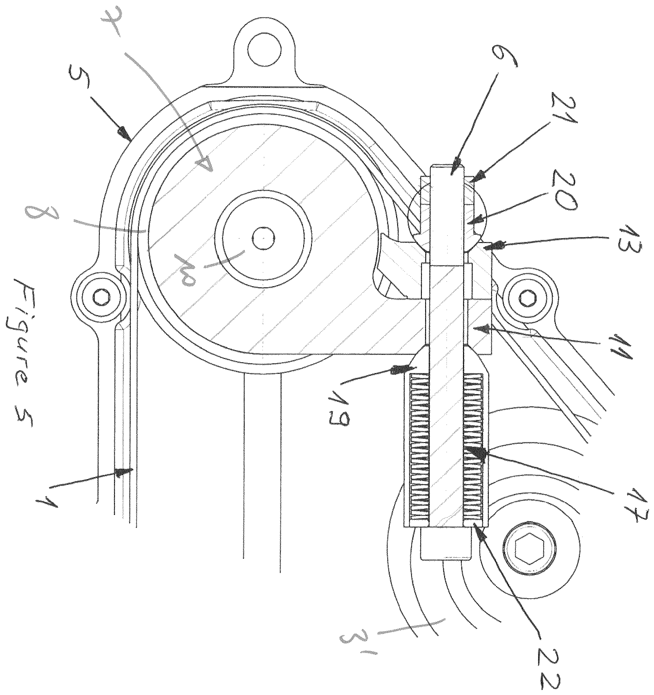

**Figure 5** - Detail view of Figure 4;

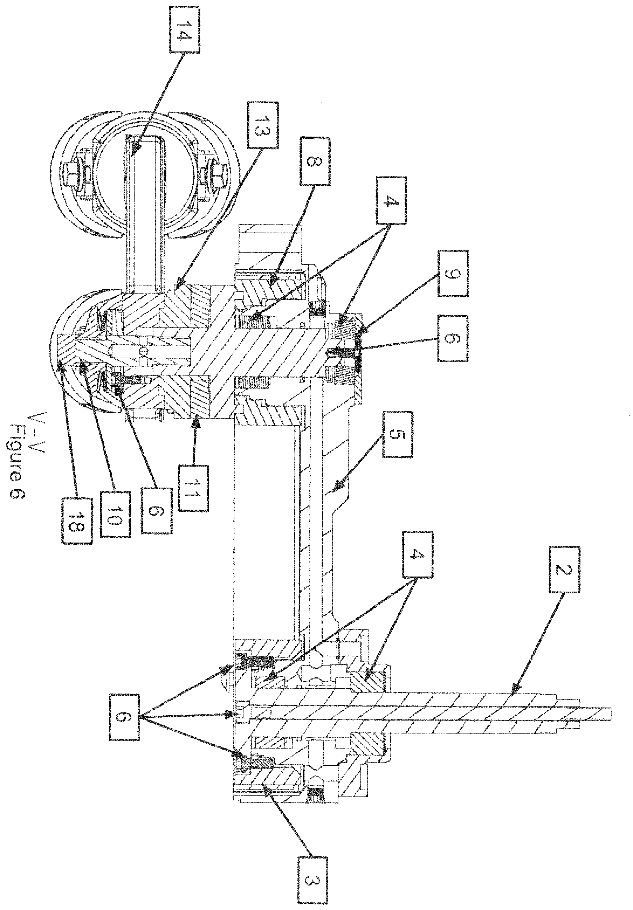

**Figure 6** - Top view of the Takeout Arm and the shock absorber showing Section V-V;

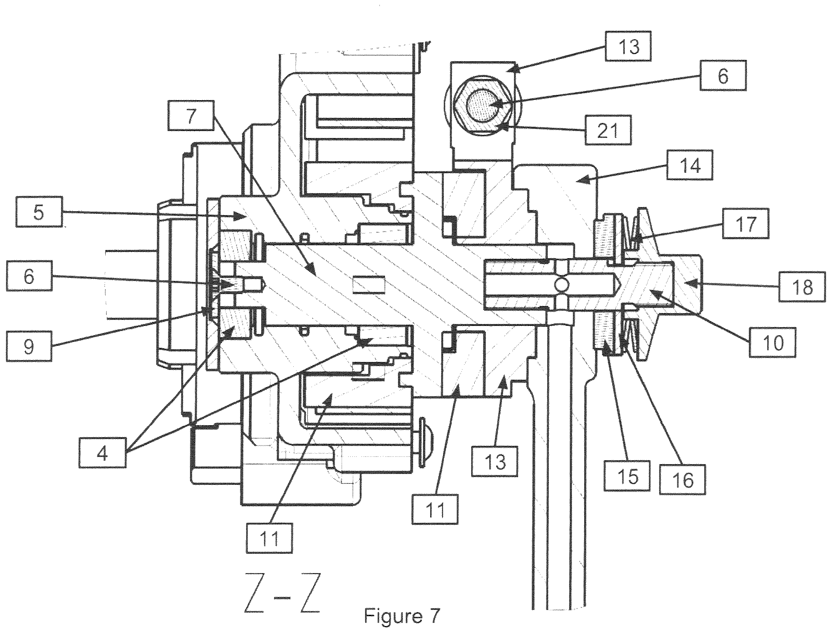

**Figure 7** - Side view of the Takeout Arm and the shock absorber showing Section Z-Z;

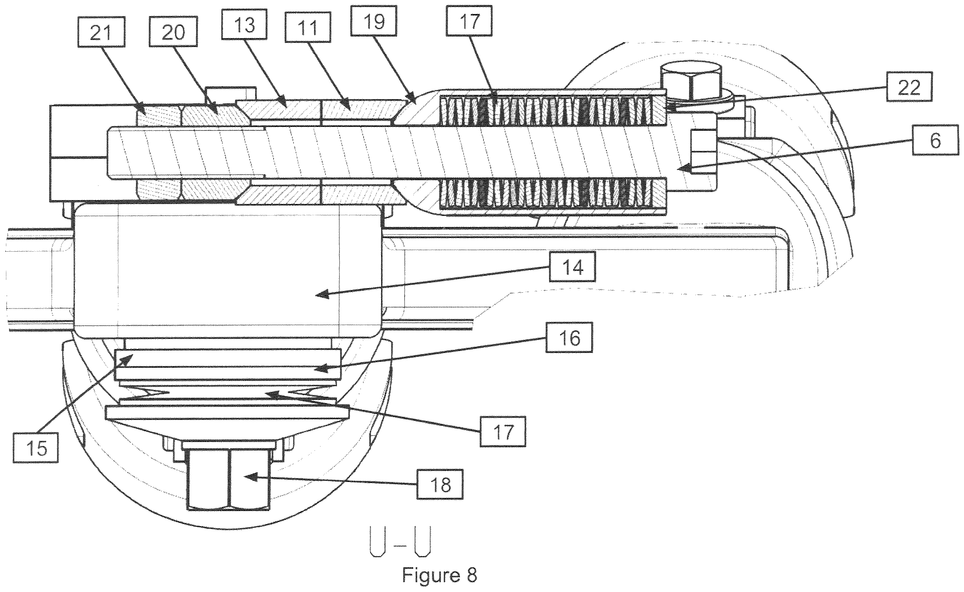

**Figure 8** - Top view of the Takeout Arm and the shock absorber showing Section U-U;
**Figure 9** - Front view of the Takeout Arm and the shock absorber showing Section X-X with the Shock Absorber in an actuated, compressed state.
**Figure 10** - Front view of the take out arm and the shock absorber with impact on Takeout tong head;

### DETAILED DESCRIPTION

The take out arm "TOA" comprises three timing belt pulleys 3, 3', 8, mounted within a housing 5, which are all physically linked for example with a timing belt 1. The input shaft 2 is fixed both axially and radially. The driving timing belt pulley 3 is mounted to the input shaft 2 using one or more bolts 6. The entire take out arm can rotate freely about the input shaft 2 and driving timing belt pulley 3, by means of one or more bearings or bushings 4.

The output timing belt pulley 8 is bolted the output shaft 7 and are both fixed axially but can rotate freely within the housing 5 of the TOA. The output shaft 7 is supported by one or more bearings or bushings 4 placed in a bearing seat in the housing 5. The output shaft end cap 9 is fastened to the shaft and secures the bearing or bushing 4 onto the output shaft 7, which acts as an end stop to fix the output shaft 7 axially. A connecting screw 10 is fastened to the output shaft 7 by a threaded connection.

The TOA adapter plate 11 is in contact with the output shaft 7 and its motion is fixed relative to the output shaft 7. The TOA adapter plate 11 has a reference surface 12a which pairs to another reference surface 12b on the Tong Head adapter plate 13, to limit the rotation of the Tong Head 14 relative to the output shaft 7. The Tong Head adapter plate 13 is fastened to the Tong Head 14 using one or more bolts 6. The shock absorber compresses the two reference surfaces 12a, 12b together and ensures that they remain in contact while the system is in both neutral and standard operating conditions.

The Tong Head 14 is mounted on, and can rotate freely about the output shaft 7 and connecting screw 10. A washer 15 is fastened to the Tong Head 14 using one or more bolts 6. A washer 16 is placed on the connecting screw and is used as a contact surface for one or more disc springs, helical springs, or other spring systems 17.

An end cap 18 is fastened to the connecting screw 10 with a threaded connection. The end cap compresses the one or more springs 17 as the threaded joint between the end cap 18 and connecting screw 10 is tightened. This generates a linear spring force that secures the springs, 17, washers 15, 16, Tong Head 14 and adapter plates 11, 13 to the output shaft 7.

A frictionless (reduced) surface is present by using one or more bearings, bushings or other 4 between the TOA adapter plate 11 and Tong Head adapter plate 13 as well as between both washers 15, 16.

The shock absorber's design comprises the following components:
-) A ball end spring housing 19
-) one or more disc springs, linear springs, or other spring systems 17 referred to as "springs" for the remainder of the patent application. Other equivalent means are of course possible, such as for example deformable materials.
-) a ball end nut 20
-) a locking nut 21
-) a housing end cap 22
-) a bolt 6.

In detail, one or more springs 17 are inserted to the ball end spring housing 19, which are mounted on a bolt 6.

A housing end cap 22 fits within the ball end spring housing 19 and encloses the springs 17 within. The housing end cap 22 is used as a contact surface for the bolt 6 that fastens the assembly. The bolt 6 passes through the TOA plate 11 and tong head 13 adapter plates and is secured with a ball end nut 20 and a locking nut 21 in sequence. The ball end nut 20 and ball end spring housing 19 sit on conical surfaces which allows them to rotate freely. The nut and bolt assembly is tightened, generating preload in the one or more springs 17 in the ball end spring housing 19. This preload creates an equal on opposite reaction on the tong head 13 and Tong Head Adapter plates 11 keeping them pressed together in standard operating conditions and neutral.

A preload of the assembly is sufficient to ensure that there is no relative motion between the tong head 14 and the output shaft 7 which can be caused by the inertial properties of the mechanism while it is in motion.

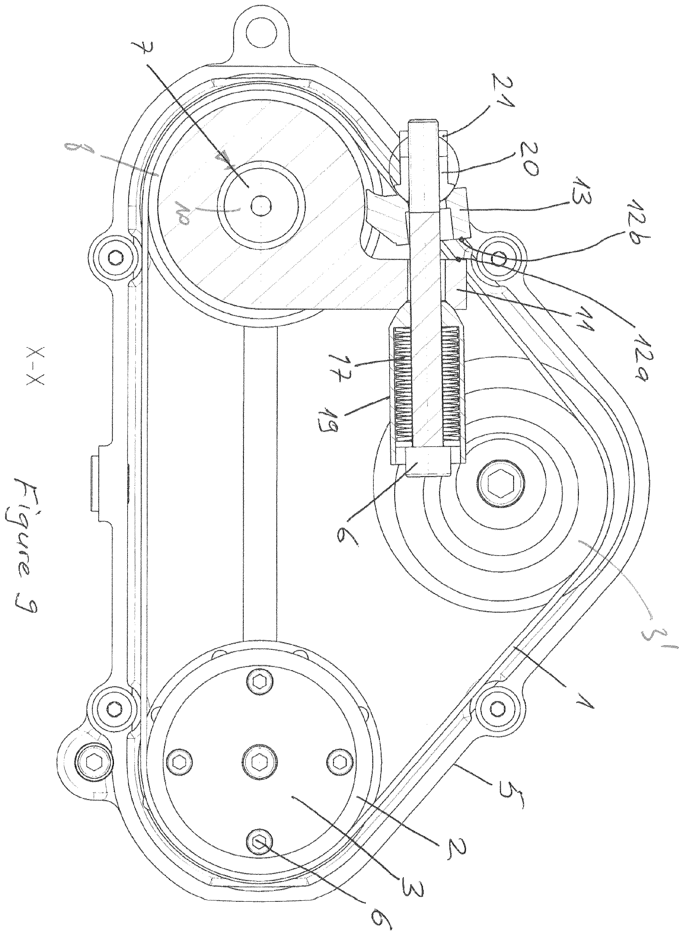

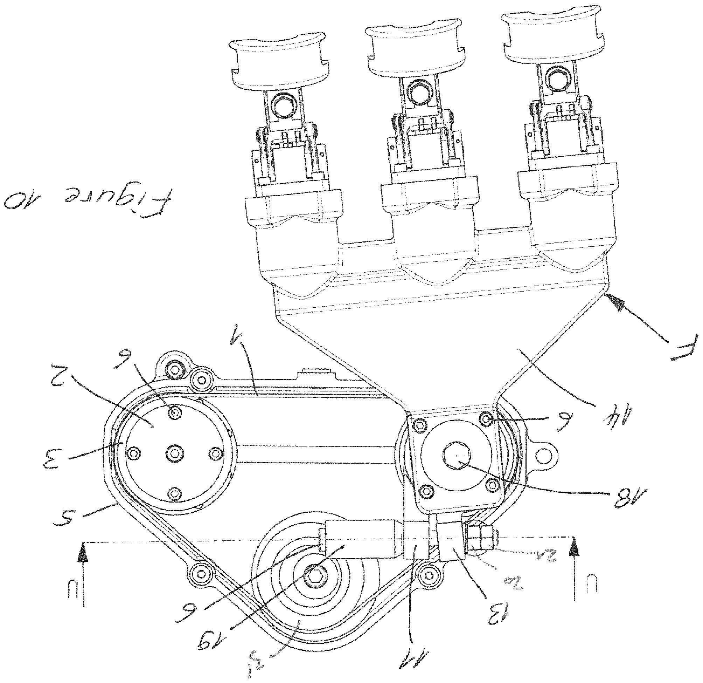

Upon impact (F) see figures 9 and 10, the tong head 14 is submitted to an impact force which translates to a torque about the output shaft 7. The low friction surfaces between the tong head and washer 15 and between both adapter plates 11, 13 allow for the tong head 14 to rotate easily relative to the output shaft 7. The rotation of the tong head adapter plate 13 relative to the output shaft 7 increases the distance between the conical surfaces of the adapter plates, which pulls the ball end nut 20 and locking nut 21 along a radial path. Since the linear distance between the screw head and ball end nut 20 is fixed, the springs 17 in the housing 19 must compress, which actively dissipates the kinetic energy transferred to the system upon impact (F), effectively cushioning the impact (F).

Figure 9 shows the shock absorber in an active position. The shock absorber dissipates the energy and reduces the overall forces and torques induced on the timing belt and input shaft, as well as other components of the TOA. The compressive nature of the shock absorber also returns the Tong Head 14 and TOA adapter plate 11 to their neutral reference positions, once the forces acting on the system have stabilized.

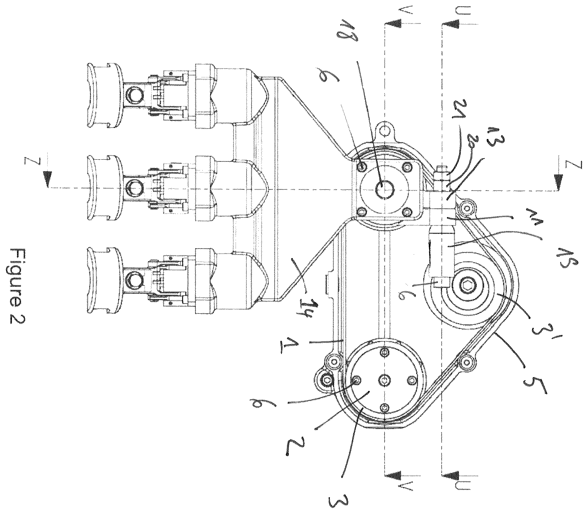

Figure 10 shows another view of the shock absorber in an active position, once a shock has been applied to the head 14, this shock being illustrated by the arrow "F" and the position of the head 14 shifted to the side (compared with figure 2 for example).

The present description is neither intended nor should it be construed as being representative of the full extent and scope of the present invention. The present invention is set forth in various levels of detail herein as well as in the attached drawings and in the detailed description of the invention and no limitation as to the scope of the present invention is intended by either the inclusion or non inclusion of elements, components, etc. in the Summary. Additional aspects of the present invention are apparent from the detailed description, particularly when taken together with the drawings.

Exemplary embodiments have been described to provide an overall understanding of the principles of the structure, function, manufacture, and use of the systems and methods disclosed herein. One or more examples of these embodiments are illustrated in the accompanying drawings. Those skilled in the art will understand that the systems and methods specifically described herein and illustrated in the accompanying drawings are non-limiting exemplary embodiments and that the scope of the present invention is defined not solely by the claims. The features illustrated or described in connection with one exemplary embodiment may be combined with the features of other embodiments. Such modifications and variations are intended to be included within the scope of the present invention. A number of problems with conventional methods and systems are noted herein and the methods and systems disclosed herein may address one or more of these problems. By describing these problems, no admission as to their knowledge in the art is intended. A person having ordinary skill in the art will appreciate that, although certain methods and systems are described herein, the scope of the present invention is not so limited. Moreover, while this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the spirit and scope of this invention.

For example, springs have been disclosed as elements of the present invention but this can mean many types of materials not limited to coil springs. For example, materials such a synthetic damping materials may be used as well, alone or in combination. The principle of the present invention is also applicable to other constructions of take out arms and IS machines, the described embodiments being only illustrative.

## Claims

1. A take out arm, for an IS production machine, wherein said take out arm comprises at least an input shaft (2), a gear box (1,3,5,8), an output shaft (7) and a tongue head (14), wherein the arm comprise shock absorbing means (17) to allow a rotation of the tongue head (14) on the output shaft (7) upon an impact on the take out arm and a return to an operating position of the take out arm relative to the output shaft following said impact.

2. The arm as defined in claim 1, wherein said shock absorbing means comprise a spring system (17).

3. The arm as defined in claim 1 or 2, wherein the shock absorbing means (17) are preloaded.

4. The arm as defined in one of the preceding claims, wherein an Take out arm adapter plate (11) of the take out arm (14) is in contact with the output shaft (7) and its motion is fixed relative to the output shaft (7), wherein the adapter plate (11) has a reference surface (12a) which pairs to another reference surface (12b) on a tong head adapter plate (13), to limit the rotation of the tong head (14) relative to the output shaft (7), and wherein the shock absorbing means (17) compress the two reference surfaces (12a, 12b) together and ensure that they remain in contact while the system is in both neutral and standard operating conditions.

5. The arm as defined in one of the preceding claims, wherein the rotation is limited and the impact cushioned by said shock absorbing means (17).

6. The arm as defined in one of the preceding claims, wherein said shock absorbing means comprise a spring housing (19), an end cap (22) and a bolt on which are mounted a nut (20) and a locking nut (21).

7. The arm as defined in one of the preceding claims, wherein a first washer (15) is fastened to the head (14) using one or more bolts (6), wherein a second washer (16) is placed on the connecting screw (10) and is used as a contact surface for one or more spring(s) (17).

8. The arm as defined in one of the preceding claims, wherein an end cap (18) is fastened to the connecting screw (10), wherein the end cap compresses the one or more spring(s) (17) as the joint between the end cap (18) and connecting screw (10) is tightened, to generate a linear spring force that secures the springs, (17), washers (15, 16), Head (14) and adapter plates (11, 13) to the output shaft (7).

9. A machine comprising at least a take out arm as defined in one of the preceding claims.

## Patentansprüche

1. Entnahmearm für eine IS-Produktionsmaschine, wobei der Entnahmearm mindestens eine Eingangswelle (2), ein Getriebe (1, 3, 5, 8), eine Ausgangswelle (7) und einen Zangenkopf (14) umfasst, wobei der Arm eine Stoßdämpfereinrichtung (17) umfasst, um eine Drehung des Zangenkopfes (14) auf der Ausgangswelle (7) bei einem Aufprall auf den Entnahmearm und eine Rückkehr in eine Betriebsstellung des Entnahmearms in Bezug zur Ausgangswelle nach dem Aufprall zuzulassen.

2. Arm nach Anspruch 1, wobei die Stoßdämpfereinrichtung (17) ein Federsystem umfasst.

3. Arm nach Anspruch 1 oder 2, wobei die Stoßdämpfereinrichtung (17) vorgespannt ist.

4. Arm nach einem der vorstehenden Ansprüche, wobei eine Entnahmearmadapterplatte (11) des Entnahmearms (14) die Ausgangswelle (7) berührt und seine Bewegung in Bezug zur Ausgangswelle (7) fixiert ist, wobei die Adapterplatte (11) eine Bezugsfläche (12a) aufweist, die sich auf einer Zangenkopfadapterplatte (13) mit einer anderen Bezugsfläche (12b) verbindet, um die Drehung des Zangenkopfes (14) in Bezug zur Ausgangswelle (7) einzuschränken, und wobei die Stoßdämpfereinrichtung (17) die zwei Bezugsflächen (12a, 12b) zusammendrückt und gewährleistet, dass sie in Kontakt bleiben, während sich das System sowohl im neutralen als auch im Standardbetriebszustand befindet.

5. Arm nach einem der vorstehenden Ansprüche, wobei durch die Stoßdämpfereinrichtung (17) die Drehung eingeschränkt und der Aufprall abgefedert wird.

6. Arm nach einem der vorstehenden Ansprüche, wobei die Stoßdämpfereinrichtung ein Federgehäuse (19), eine Endkappe (22) und einen Bolzen, auf dem eine Mutter (20) und eine Kontermutter (21) montiert sind, umfasst.

7. Arm nach einem der vorstehenden Ansprüche, wobei eine erste Unterlegscheibe (15) unter Verwendung eines oder mehrerer Bolzen (6) am Kopf (14) befestigt ist, wobei eine zweite Unterlegscheibe (16) auf der Verbindungsschraube (10) platziert ist und als Kontaktfläche für eine Feder oder mehrere Federn (17) verwendet wird.

8. Arm nach einem der vorstehenden Ansprüche, wobei eine Endkappe (18) an der Verbindungsschraube (10) befestigt ist, wobei die Endkappe die eine Feder oder die mehreren Federn (17) zusammendrückt, während die Verbindung zwischen der Endkappe (18) und der Verbindungsschraube (10) angezogen wird, um eine lineare Federkraft zu erzeugen, die die Federn (17), die Unterlegscheiben (15, 16), den Kopf (14) und die Adapterplatten (11, 13) an der Ausgangswelle (7) fixiert.

9. Maschine, die mindestens einen Entnahmearm nach einem der vorstehenden Ansprüche umfasst.

## Revendications

1. Bras d'extracteur pour une machine de production sectionnelle, ledit bras d'extracteur comprenant au moins un arbre d'entrée (2), une boite de vitesses (1, 3, 5, 8), un arbre de sortie (7) et une tête à pinces (14), le bras comprenant des moyens d'amortissement (17) pour permettre une rotation de la tête à pinces (14) sur l'arbre de sortie (7) lors d'un impact sur le bras d'extraction et un retour à une position fonctionnelle du bras d'extraction par rapport à l'arbre de sortie à la suite dudit impact.

2. Bras selon la revendication 1, dans lequel lesdits moyens d'amortissement comprennent un système à ressort (17) .

3. Bras selon la revendication 1 ou 2, dans lequel lesdits moyens d'amortissement (17) sont préchargés.

4. Bras selon l'une des revendications précédentes, dans lequel une plaque d'adaptation de bras d'extracteur (11) du bras d'extracteur (14) est en contact avec l'arbre de sortie (7) et son mouvement est fixé par rapport à l'arbre de sortie (7), dans lequel la plaque d'adaptation (11) comporte une surface de référence (12a) qui s'accouple avec une autre surface de référence (12b) sur une plaque d'adaptation de tête à pinces (13) afin de limiter la rotation de la tête à pinces (14) par rapport à l'arbre de sortie (7), et dans lequel les moyens d'amortissement (17) compriment les deux surfaces de référence (12A, 12b) ensemble et garantissent qu'elles restent en contact lorsque le système se trouve dans les états de fonctionnement neutre et standard.

5. Bras selon l'une des revendications précédentes, dans lequel la rotation est limitée et l'impact est amorti par lesdits moyens d'amortissement (17).

6. Bras selon l'une des revendications précédentes, dans lequel lesdits moyens d'amortissement comprennent un logement de ressort (19), un bouchon d'extrémité (22) et une vis de boulon sur laquelle sont montés un écrou (20) et un écrou de blocage (21).

7. Bras selon l'une des revendications précédentes, dans lequel une première rondelle (15) est fixée à la tête (14) au moyen d'une ou de plusieurs vis de boulon (6), dans lequel une seconde rondelle (16) est placée sur la vis d'assemblage (10) et est utilisée comme surface de contact pour un ou plusieurs ressort(s) (17).

8. Bras selon l'une des revendications précédentes, dans lequel un bouchon d'extrémité (18) est fixé à la vis d'assemblage (10), dans lequel le bouchon d'extrémité comprime le ou les ressort (s) (17) à mesure que la liaison entre le bouchon d'extrémité (18) et la vis d'assemblage (10) est serrée afin de générer une force de rappel linéaire qui assujettit les ressorts (17), les rondelles (15, 16), la tête (14) et les plaques d'adaptation (11, 13) à l'arbre de sortie (7).

9. Machine comprenant au moins un bras d'extracteur selon l'une des revendications précédentes.
